# EUROPÄISCHE PATENTSCHRIFT

(11) **EP 3 377 758 B1**
(45) Veröffentlichungstag und Bekanntmachung des Hinweises auf die Patenterteilung: **14.08.2019**
(21) Anmeldenummer: 16797538.2
(22) Anmeldetag: 16.11.2016
(51) Int. Cl.: F03D 1/06, F03D 13/10

(54) **WINDENERGIEANLAGEN-ROTORBLATT UND WINDENERGIEANLAGE**
WIND TURBINE ROTOR BLADE AND WIND TURBINE
PALE DE ROTOR D'ÉOLIENNE ET ÉOLIENNE

(30) Priorität: 20.11.2015 DE 102015120113
(43) Veröffentlichungstag der Anmeldung: 26.09.2018
(73) Patentinhaber: Wobben Properties GmbH, 26607 Aurich (DE)
(72) Erfinder: HOFFMANN, Alexander, 26721 Emden (DE)
(74) Vertreter: Eisenführ Speiser
(86) Internationale Anmeldenummer: PCT/EP2016/077789
(87) Internationale Veröffentlichungsnummer: WO 2017/085088

(56) Entgegenhaltungen:
- DE-A1-102010 046 518
- US-A1- 2011 091 326

## Beschreibung

Die vorliegende Erfindung betrifft ein Windenergieanlagen-Rotorblatt sowie eine Windenergieanlage.

Rotorblätter moderner Windenergieanlagen können mittlerweile so lang sein, dass ein Transport des Rotorblattes in einem Stück nicht mehr möglich ist. Daher kann ein Rotorblatt einer Windenergieanlage mehrteilig ausgestaltet sein, so dass die jeweiligen Teile separat zur Baustelle angeliefert werden und dann dort zusammengesetzt werden.

In der prioritätsbegründenden deutschen Patentanmeldung hat das Deutsche Patent- und Markenamt die folgenden Dokumente recherchiert: DE 10 2010 046 518 A1, DE 10 2010 046 519 A1, DE 10 2006 022 279 A1.

US 2011/091326 A1 zeigt ein Windenergieanlagen-Rotorblatt mit einem ersten und zweiten Rotorblattteil, welche mittels einer Befestigungseinheit aneinander befestigt sind. Die Befestigungseinheit weist eine erste und zweite Klemmeinheit sowie ein Stahlseil auf, mittels welchen das erste und zweite Rotorblattteil befestigt werden.

DE 10 2010 046 518 A1 zeigt ein Windenergieanlagen-Rotorblatt mit zwei Rotorblattteilen, welche mittels eines Befestigungselementes aneinander befestigt sind.

Es ist eine Aufgabe der vorliegenden Erfindung, ein Windenergieanlagen-Rotorblatt sowie eine Windenergieanlage vorzusehen, welche eine verbesserte Verbindung der Teile eines mehrteiligen Windenergieanlagen-Rotorblattes aufweist.

Diese Aufgabe wird durch ein Windenergieanlagen-Rotorblatt nach Anspruch 1 gelöst.

Somit wird ein Windenergieanlagen-Rotorblatt mit einer Rotorblattwurzel, einer Rotorblattspitze und mindestens zwei Rotorblattteilen vorgesehen, welche mittels mindestens einer Befestigungseinheit in einer Teilungsebene miteinander befestigt sind. Die Befestigungseinheit weist einen Querbolzen in einem ersten Rotorblattteil, eine erste Klemmeinrichtung in oder an dem Querbolzen, ein Stahlseil, welches durch ein Loch in dem zweiten Rotorblattteil geführt ist und eine zweite Klemmeinrichtung auf, mit welcher ein zweites Ende des Stahlseiles eingeklemmt ist. Ein erstes Ende des Stahlseils ist in der ersten Klemmeinrichtung auf einer Blattaußenseite eingeklemmt. Die zweite Klemmeinrichtung ist auf einer Blattinnenseite vorgesehen.

Gemäß einem Aspekt der vorliegenden Erfindung weist das Windenergieanlagen-Rotorblatt eine Umlenkeinheit in der Öffnung in dem zweiten Rotorblattteil auf. Damit kann die Umlenkung des Stahlseils vereinfacht werden. Ferner kann das Stahlseil durch die Umlenkeinheit besser geschützt sein.

Gemäß einem weiteren Aspekt der vorliegenden Erfindung weist die Befestigungseinheit einen Spannbolzen auf, welcher in oder an dem Querbolzen sowie an der zweiten Klemmeinrichtung gekoppelt ist und zum Spannen des Stahlseils verwendet werden kann.

Die vorliegende Erfindung betrifft ebenfalls eine Windenergieanlage mit mindestens einem oben beschriebenen Windenergieanlagen-Rotorblatt.

Die Erfindung betrifft ebenfalls ein Verfahren zur Montage eines Windenergieanlagen-Rotorblattes, welches eine Rotorblattwurzel, eine Rotorblattspitze, eine Wandung, eine Rotorblattinnenseite, eine Rotorblattaußenseite und zumindest ein erstes und zweites Rotorblattteil aufweist, welches mittels mindestens einer Befestigungseinheit in einer Teilungsebene miteinander befestigt sind. Die Befestigungseinheit weist einen Querbolzen in einem ersten Rotorblattteil, eine erste Klemmeinrichtung in oder an dem Querbolzen, ein Stahlseil, welches durch ein Loch in dem zweiten Rotorblattteil geführt ist und eine zweite Klemmeinrichtung auf, mittels welcher das zweite Ende des Stahlseils geklemmt ist. Ein erstes Ende des Stahlseils ist in der ersten Klemmeinrichtung auf der Blattaußenseite eingeklemmt. Die zweite Klemmeinrichtung ist auf der Blattinnenseite vorgesehen.

Weitere Ausgestaltungen der Erfindung sind Gegenstand der Unteransprüche.

Die Erfindung betrifft einen Gedanken, zwei Bauteile (beispielsweise GFK-Bauteile, glasfaserverstärkte Kunststoff-Bauteile oder kohlenfaserverstärkte Kunststoff-Bauteile) eines Rotorblatts einer Windenergieanlage so zu verbinden, dass eine Wartung der Verbindung aus dem Inneren des Rotorblattes möglich ist. Zur Verbindung von zwei Bauteilen eines Windenergieanlagen-Rotorblattes wird eine Befestigungseinheit vorgesehen, welche eine erste Klemmeinrichtung, mindestens ein Stahlseil und eine zweite Klemmeinrichtung aufweist. Ein erstes Ende eines Stahlseils wird in der ersten Klemmeinrichtung beispielsweise an einer Blattaußenseite vorgesehen. Die erste Klemmeinrichtung ist an einem ersten Rotorblattteil befestigt. Das Stahlteil wird durch eine Öffnung in dem zweiten Rotorblattteil durchgeführt und an der Innenseite mittels einer zweiten Klemmeinrichtung befestigt. Da die zweite Klemmeinrichtung auf der Blattinnenseite vorgesehen ist, kann die Verbindung von innen gewartet werden.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Darstellung eines mehrteiligen Windenergieanlagen-Rotorblatts gemäß der Erfindung, und
- Fig. 3: zeigt eine Schnittansicht eines Abschnitts eines Windenergieanlagen-Rotorblattes gemäß einem ersten Ausführungsbeispiel der Erfindung.

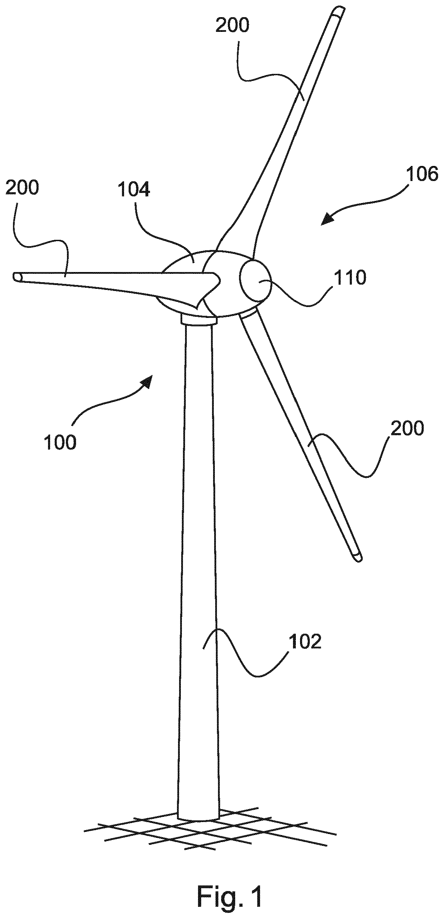

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

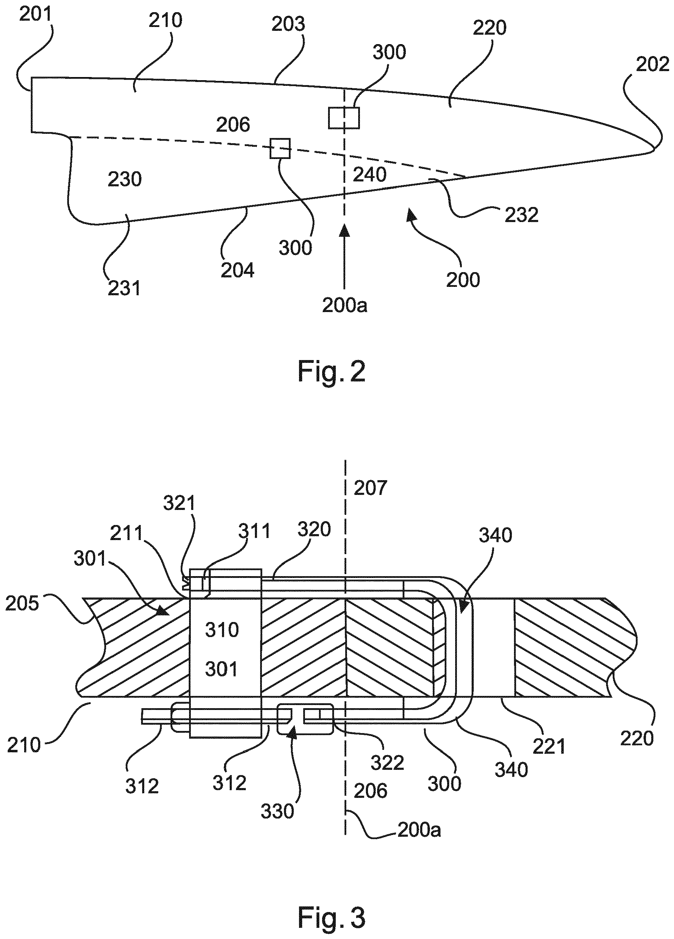

Fig. 2 zeigt eine schematische Darstellung eines mehrteiligen Windenergieanlagen-Rotorblatts gemäß der Erfindung. Das Rotorblatt weist eine Rotorblattwurzel 201, eine Rotorblattspitze 202, eine Rotorblattvorderkante 203 und eine Rotorblatthinterkante 204 auf und besteht beispielsweise aus drei Teilen bzw. Abschnitten 210 - 220. Das Rotorblatt 200 weist eine Teilungsebene 200a auf. Die Rotorblattteile 210 - 220 können beispielsweise mittels Befestigungseinheiten 300 und der Teilungsebene 200a aneinander befestigt werden. Dieser Abschnitt 230 kann zweigeteilt 231, 232 ausgestaltet sein, wobei der erste Teil 231 an den ersten Abschnitt 210 und der zweite Teil 232 an den zweiten Abschnitt 220 befestigt ist.

Fig. 3 zeigt eine Schnittansicht eines Abschnitts eines Windenergieanlagen-Rotorblattes gemäß einem ersten Ausführungsbeispiel der Erfindung. In Fig. 3 ist ein erstes Rotorblattteil 210, ein zweites Rotorblattteil 220 sowie die Befestigungseinheit 300 gezeigt. Das erste und zweite Rotorblattteil 210, 220 weist jeweils eine Wandung 205 eine Blattinnenseite 206 und eine Blattaußenseite 207 auf. In dem ersten Rotorblattteil 210 ist eine erste Klemmeinrichtung 311 in einem Querbolzen 301 vorgesehen. Damit weist auch das Rotorblatt eine Blattinnenseite 206 und eine Blattaußenseite 207 auf.

Die Befestigungseinheit 300 weist ferner mindestens ein Stahlseil 320, eine zweite Klemmeinrichtung 330 sowie einen Spannbolzen 312 mit einer Mutter und ggf. einer Unterfütterung mit Tellerfedern auf. Ein erstes Ende 321 des Stahlseiles 320 wird in der ersten Klemmeinrichtung 311 (die an der Blattaußenseite 207 vorgesehen ist) eingespannt, dann wird das Stahlseil 320 an der Blattaußenseite 207 geführt und durch ein Loch 221 in dem zweiten Rotorblattteil 220 in das Blattinnere 206 geführt. Das zweite Ende 322 ist in der zweiten Klemmeinrichtung 330 (an der Blattinnenseite 206) eingeklemmt. Die zweite Klemmeinrichtung 330 ist über einen Spannbolzen 312 mit dem Querbolzen 301 verbunden.

Da die zweite Klemmeinrichtung 330 auf der Blattinnenseite 206 vorgesehen ist, kann diese Klemmeinrichtung von innen heraus gewartet werden.

Das Stahlseil 320 kann zumindest abschnittsweise vorgebogen sein und zwar insbesondere in dem Bereich, wo das Stahlseil durch die Blattöffnung 221 geführt werden soll. Die zweite Klemmeinrichtung 330 kann in einer keilförmigen, konusförmigen oder trapezförmigen Nut in dem Bolzen 312 vorgesehen sein. Damit kann das Seil sich selbst durch Zugspannung sichern.

Optional kann eine Umlenkeinheit 340 im Bereich des Loches 221 des zweiten Rotorblattteiles 220 vorgesehen sein. Das Stahlseil 320 kann in dieser Umlenkeinheit 340 durch das Loch 221 geführt sein. Die Umlenkeinheit 340 kann zum Schutz des Stahlseiles vorgesehen sein, weil dadurch verhindert werden kann, dass das Stahlseil 340 an den Kanten der Öffnung 221 beschädigt werden kann. Ferner kann damit auch vermieden werden, dass die Kanten der Öffnung 221 beschädigt werden.

Alternativ zu dem Stahlseil 320 kann auch ein Seil aus einem anderen Material verwendet werden, das ähnliche mechanische Eigenschaften aufweist.

## Patentansprüche

1. Windenergieanlagen-Rotorblatt, mit
einer Rotorblattwurzel (201), einer Rotorblattspitze (202), einer Wandung (205), eine Blattinnenseite (206), eine Blattaußenseite (207) und mindestens einem ersten und zweiten Rotorblattteil (210, 220), welche mittels mindestens einer Befestigungseinheit (300) in einer Teilungsebene (200a) miteinander befestigt sind,
wobei die Befestigungseinheit (300) einen Querbolzen (301) in einem ersten Rotorblattteil (210), eine erste Klemmeinrichtung (311) in oder an dem Querbolzen (301), ein Stahlseil (320), welches durch ein Loch (221) in dem zweiten Rotorblattteil (220) geführt ist, und eine zweite Klemmeinrichtung (330) aufweist, mit welcher ein zweites Ende (322) des Stahlseiles (310) geklemmt ist,
wobei ein erstes Ende (321) des Stahlseiles (320) in der ersten Klemmeinrichtung (311) auf der Blattaußenseite (207) eingeklemmt ist,
wobei die zweite Klemmeinrichtung (330) auf der Blattinnenseite (206) vorgesehen ist.

2. Windenergieanlagen-Rotorblatt nach Anspruch 1, ferner mit
einer Umlenkeinheit (340) in der Öffnung (221) in dem zweiten Rotorblattteil (220).

3. Windenergieanlagen-Rotorblatt nach Anspruch 1 oder 2, wobei
die Befestigungseinheit (300) einen Spannbolzen (312) aufweist, welcher in oder an dem Querbolzen (301) sowie an der zweiten Klemmeinrichtung (312) gekoppelt ist und zum Spannen des Stahlseiles (320) verwendbar ist.

4. Windenergieanlagen-Rotorblatt nach einem der Ansprüche 1 bis 3, wobei
die Teilungsebene (200a) zwischen der Rotorblattwurzel (201) und der Rotorblattspitze (202) angeordnet ist.

5. Windenergieanlage, mit
mindestens einem Windenergieanlagen-Rotorblatt nach einem der Ansprüche 1 bis 4.

6. Verfahren zur Montage eines Windenergieanlagen-Rotorblattes, wobei das Windenenergieanlagen-Rotorblatt eine Rotorblattwurzel (201), eine Rotorblattspitze (202), eine Wandung (205), eine Blattinnenseite (206), eine Blattaußenseite (207) und mindestens ein erstes und zweites Rotorblattteil (210, 220) aufweist, welche mittels einer Befestigungseinheit (300) in einer Teilungsebene (200a) miteinander befestigt sind, wobei die Befestigungseinheit (300) einen Querbolzen (301) in einem ersten Rotorblattteil (210), eine erste Klemmeinrichtung (311) in oder an dem Querbolzen (301), ein Stahlseil (302) und eine zweite Klemmeinrichtung (330) aufweist, mit den Schritten:
Führen des Stahlseiles (302) durch ein Loch (221) in den zweiten Rotorblattteil (220),
Klemmen eines zweiten Endes des Stahlseiles (310) in der zweiten Klemmeinrichtung (330),
Klemmen eines ersten Endes (321) des Stahlseiles (320) in der ersten Klemmeinrichtung (311) auf der Blattaußenseite (207),
wobei die zweite Klemmeinrichtung (330) auf der Blattinnenseite (206) vorgesehen ist.

## Claims

1. Wind turbine rotor blade comprising
a rotor blade root (201), a rotor blade tip (202), a wall (205), a blade inner side (206), a blade outer side (207) and at least one first and second rotor blade part (210, 220) which are secured to one another by means of at least one securing unit (300) in a dividing plane (200a),
wherein the securing unit (300) has a cross pin (301) in a first rotor blade part (210), a first clamping device (311) in or on the cross pin (301), a steel cable (302) which is guided through a hole (221) in the second rotor blade part (220) and a second clamping device (330) with which a second end (322) of the steel cable (310) is clamped,
wherein a first end (321) of the steel cable (320) is clamped in the first clamping device (311) on the blade outer side (207),
wherein the second clamping device (330) is provided on the blade inner side (206).

2. The wind turbine rotor blade according to claim 1, further comprising a deflecting unit (340) in the opening (221) in the second rotor blade part (220).

3. The wind turbine rotor blade according to claim 1 or 2, wherein the securing unit (300) has a tensioning bolt (312) which is coupled in or on the cross pin (301) and on the second clamping device (312) and can be used for tensioning the steel cable (320).

4. The wind turbine rotor blade according to one of claims 1 to 3, wherein the dividing plane (200a) is arranged between the rotor blade root (201) and the rotor blade tip (202).

5. Wind turbine having at least one wind turbine rotor blade according to one of claims 1 to 4.

6. Method for assembling a wind turbine rotor blade, wherein the wind turbine rotor blade comprises a rotor blade root (201), a rotor blade tip (202), a wall (205), a blade inner side (206), a blade outer side (207) and at least one first and second rotor blade part (210, 220) which are secured to one another by means of at least one securing unit (300) in a dividing plane (200a), wherein the securing unit (300) has a cross pin (301) in a first rotor blade part (210), a first clamping device (311) in or on the cross pin (301), a steel cable (302) and a second clamping device (330), comprising the steps:
guiding the steel cable (302) through a hole (221) in the second rotor blade part (220),
clamping a second end of the steel cable (310) in the second clamping device (330),
clamping a first end (321) of the steel cable (320) in the first clamping device (311) on the blade outer side (207),
wherein the second clamping device (330) is provided on the blade inner side (206).

## Revendications

1. Pale de rotor d'éolienne, avec
un pied de pale de rotor (201), une pointe de pale de rotor (202), une paroi (205), un côté intérieur de pale (206), un côté extérieur de pale (207) et au moins une première et une deuxième partie de pale de rotor (210, 220), lesquelles sont fixées l'une à l'autre dans un plan de division (200a) au moyen d'au moins une unité de fixation (300),
dans laquelle l'unité de fixation (300) présente un boulon transversal (301) dans une première partie de pale de rotor (210), un premier dispositif de serrage (311) dans le boulon transversal (301) ou au niveau de celui-ci, un câble en acier (320), lequel est guidé à travers un trou (221) dans la deuxième partie de pale de rotor (220), et un deuxième dispositif de serrage (330), avec lequel une seconde extrémité (322) du câble en acier (310) est serrée,
dans laquelle une première extrémité (321) du câble en acier (320) est coincée dans le premier dispositif de serrage (311) sur le côté extérieur de pale (207),
dans laquelle le deuxième dispositif de serrage (330) est prévu sur le côté intérieur de pale (206).

2. Pale de rotor d'éolienne selon la revendication 1, avec en outre
une unité de renvoi (340) dans l'ouverture (221) dans la deuxième partie de pale de rotor (220).

3. Pale de rotor d'éolienne selon la revendication 1 ou 2, dans laquelle
l'unité de fixation (300) présente un boulon de mise sous tension (312), lequel est couplé dans le boulon transversal (301) ou au niveau de celui-ci ainsi qu'au niveau du deuxième dispositif de serrage (312) et peut être utilisé pour mettre sous tension le câble en acier (320).

4. Pale de rotor d'éolienne selon l'une quelconque des revendications 1 à 3, dans laquelle
le plan de division (200a) est disposé entre le pied de pale de rotor (201) et la pointe de pale de rotor (202).

5. Eolienne avec
au moins une pale de rotor d'éolienne selon l'une quelconque des revendications 1 à 4.

6. Procédé servant au montage d'une pale de rotor d'éolienne, dans lequel la pale de rotor d'éolienne présente un pied de pale de rotor (201), une pointe de pale de rotor (202), une paroi (205), un côté intérieur de pale (206), un côté extérieur de pale (207) et au moins une première et une deuxième partie de pale de rotor (210, 220), lesquelles sont fixées l'une à l'autre dans un plan de division (200a) au moyen d'une unité de fixation (300), dans lequel l'unité de fixation (300) présente un boulon transversal (301) dans une première partie de pale de rotor (210), un premier dispositif de serrage (311) dans le boulon transversal (301) ou au niveau de celui-ci, un câble en acier (302) et un deuxième dispositif de serrage (330), avec les étapes :
de guidage du câble en acier (302) à travers un trou (221) dans la deuxième partie de pale de rotor (220),
de serrage d'une seconde extrémité du câble en acier (310) dans le deuxième dispositif de serrage (330),
de serrage d'une première extrémité (321) du câble en acier (320) dans le premier dispositif de serrage (311) sur le côté extérieur de pale (207),
dans lequel le deuxième dispositif de serrage (330) est prévu sur le côté intérieur de pale (206).
